# EUROPEAN PATENT APPLICATION

(11) **EP 1 178 160 A2**
(43) Date of publication of application: **06.02.2002**
(21) Application number: 01306517.2
(22) Date of filing: 30.07.2001
(51) Int. Cl.: E04B 1/61

(54) **Channel connectors and connection methods**

(30) Priority: 03.08.2000 GB 0018910
(71) Applicant: Herman Miller Limited, Bath BA2 3ER (GB)
(72) Inventor: Booty, Alan, Bath BA3 6HR (GB)
(74) Representative: Gillam, Francis Cyril

(57) **Abstract**

A connector for use with two elongate members (10,11) each having a re-entrant channel (12,14,15) extending along the length thereof is adapted to join the members (10,11) with their channels facing each other. The connector has a main body (18) defining a first portion (22) slideable in the channel of one member and a second portion (23) simultaneously slideable in the channel of the other member the channel of which confronts that of the one member. The first and second portions (22,23) are profiled to prevent withdrawal out of the mouths of the respective channels. A cam (19) is rotatably mounted on the first portion (22) and is moveable between a free position where the main body (18) may slide along its channel and a locked position where the cam (19) engages an internal wall (12) of the channel and urges a part of the first portion into engagement with a further wall (15) of the channel so as thereby to restrain sliding movement of the body, along the length of the channel.

## Description

This invention relates to a connector adapted to connect together two elongate channel members and also to a connection between two such members. Further, the invention relates to a method of connecting together two channel members. In its preferred aspects, this invention concerns the connection together of two panels each having a channel member formed along an edge thereof.

In this specification, the invention will primarily be described with reference to temporary wall systems for use for example as room dividers, exhibition panels or display panels, though it is to be understood that the invention is not to be regarded as limited to this specific use.

Temporary wall systems are very widely used in offices, exhibition halls and so on. Such systems include panels of various sizes and provided with feet so as to be capable of free-standing. Usually each panel has a channel formed down its vertical edges so that one panel may be joined to another panel by means of a suitable clip or other connection device engaged with the aligned channels of two panels. Similarly, channels are frequently formed down the edges of exhibition display panels, whereby two or more panels may be linked together. Usually, each channel is a plastics moulding or metallic extrusion (such as of an aluminium alloy) secured to the vertical edge of a covered wood-based panel, such that the moulding or extrusion adds to the aesthetic quality of the panel, in the event that it is exposed when no panel is joined thereto.

A wide variety of clips and connectors have been proposed for joining together two panels having channels formed down the vertical edges. Most of these suffer from one or more disadvantages: for example, they may be difficult or inconvenient to use, either when joining the panels together or when attempting to release them, or the connectors may be relatively insecure and so permit the panels to be accidentally separated, when in use. Further, some connectors are aesthetically unacceptable for use in high quality panelling systems whereas others provide an unsightly gap between the adjacent channels.

It is a principal aim of the present invention to provide a connector for use with two elongate channel members such as are found on the vertical edges of temporary wall and panelling systems as discussed above, and which connector is both convenient to use and mitigates many of the disadvantages mentioned above of the known connectors.

According to the present invention, there is provided a connector for use with two elongate members each having a re-entrant channel extending along the length thereof so that the two members when joined by the connector lie side by side with the channels facing each other, said connector comprising a main body defining first and second portions each slidable in a respective channel from an open end thereof and profiled to prevent lateral withdrawal out of the mouth of the channel, and a cam rotatably mounted on said first portion and movable between a free position where the main body may be slid along the length of a channel and a locked position where the cam engages an internal wall of the channel and urges a part of said first portion into engagement with a further internal wall of the channel opposed to said wall engaged by the cam thereby to restrain the body against sliding movement.

It will be appreciated that the connector of this invention is adapted to have the two channels engaged with each other, when a joint is completed. The cam of the connector acts wholly within the channel, in effect by jamming the first portion of the main body to an internal wall of the channel and so the connector cannot be seen when in use to join two wall panels together. Thus, the connector permits a visually acceptable joint between two wall panels to be made, in a simple way and which subsequently is easy to release.

Most preferably, the cam is mounted for rotation on the first portion of the main body about an axis substantially parallel to the length of the channel in which the first portion of the main body is slidably mounted. Then, the cam, when in its locked position, may engage the base wall of the channel. Such a cam may easily be rotated by means of a suitable tool adapted to connect to the cam and inserted into the channel from the exposed open end of the channel. For example, the cam may have a hexagonal recess and may be rotated by means of an Allen key inserted lengthwise into the channel and engaged with the recess, so long as the key has a sufficient length for the position of the connector in the channel.

The re-entrant channel of each member to be joined together by the connector of this invention preferably has a pair of in-turned flanges extending along the two edges respectively at the mouth of the channel, whereby the flanges of one channel engage those of the other channel when the members are connected together. A connector for use with such channels preferably has a main body profiled closely to fit around the overlying flanges of the two channels, thereby to hold those flanges together.

A connector for use with channels as described just-above advantageously is resiliently deformable in such a way that movement of the cam to its locked position deforms the main body sufficiently to interengage the body with both channel members thereby frictionally to engage the respective flanges with each other and so to resist relative movement between the channel members. For example the first portion of the main body may have a pair of arms arranged to be disposed adjacent the inwardly-directed faces of the two flanges of the channel member in which is located the first portion, the arms being deformed towards the other channel member as the cam is turned to its locked position thereby clamping together the flanges of the two members.

This invention extends to a connection between two elongate members each having a re-entrant channel extending along the length thereof whenever made with a connector of this invention as described above, which connection when completed has the two members lying side-by-side with their respective channels facing each other.

To complete the connection between two channels, a second connector may be provided at a position spaced along the length of the channel members from the first mentioned connector. Such a second connector may be generally similar to the first connector. In the alternative, the second connector may have a pair of hook elements mounted one in each channel respectively but projecting out of that channel. By directing the hook elements in opposite senses, the hook elements may be engaged one with the other by relative movement of the channel members, generally along their lengths. This arrangement is particularly suitable for use with wall panels having the channel members provided along their vertical edges; the hook members may be mounted in the channels adjacent the lower ends of the panels and be interengaged by lifting slightly one of the panels and then lowering that panel with the channel members abutting one another. Then, the connection between the two channel members may be completed by fitting the first-mentioned connector into the channel members from the exposed upper ends thereof and turning the cam to lock the connector in position.

This invention extends to a method of connecting together two elongate members each having a re-entrant channel extending along the length thereof using a first connector of this invention as described above, and a second connector having a pair of hook elements configured for mounting one in each channel respectively, comprising disposing said hook members one in each channel at opposed locations but with the hooks elements directed in opposite senses along the length of the channels, aligning the members so as to be generally parallel, interengaging the hook elements by relatively moving the channels along their lengths so as thereby to interengage the hook elements, sliding the first and second portions of the first connector along the respective channels from the open ends thereof, and then rotating the cam of the first connector to its locked position so as thereby to restrain the first connector body against sliding movement and clamp together the two channel members.

By way of example only, one specific embodiment of connector arranged in accordance with the present invention, and also an embodiment of a connection between two channel members using the connector, will now be described in detail, reference being made to the accompanying drawings, in which:-
Figure 1 is a vertical section through the connection, taken on line I-I marked on Figure 2;
Figure 2 is an end view of the completed connection, from the upper end of the channel members;
Figure 3 is an end view of a completed connection from the lower end of the channel members;
Figure 4 shows the main body of the upper connector, Figure 4A being a section taken on line A-A and Figure 4B on line B-B marked on Figure 4;
Figures 5A and 5B respectively show the cam of the upper connector in its free and locked positions, with the connector located in a pair of channel members; and
Figure 6 is a side view on a hook element of the lower connector shown in Figure 1.

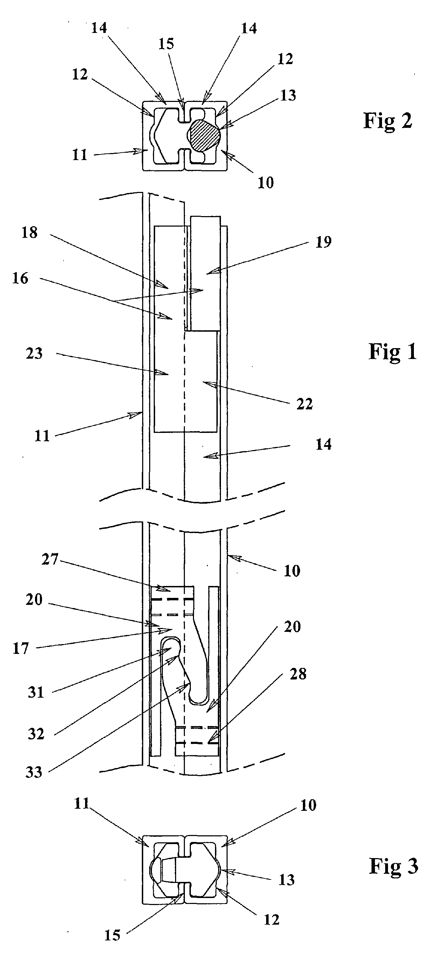

Referring initially to Figures 1 to 3, there is shown a completed connection between two elongate channel members 10 and 11 provided, for example, along the vertical edges of two adjacent wall panels or dividers (not shown). Each channel member 10,11 defines a channel of generally rectangular shape and having an internal base wall 12 with an arcuate recess 13, a pair of side walls 14 and in-turned flanges 15 extending along the mouth of the channel. Typically, each such channel member comprises an aluminium alloy extrusion secured to the edge of a wooden panel covered with an attractive facing material and may be from 1 to 2m long.

The connection between the two channel members 10,11 is made using two separate connectors; the upper connector 16 is positioned adjacent the upper ends of the channels and the lower connector 17 is positioned adjacent the lower ends of the channels, when in use on wall panels or dividers as mentioned above. The upper connector comprises a main body 18 and a cam 19 rotatable between free and locked positions. When in its locked position, the cam 19 secures the main body 18 against movement along the length of the channel members as well as clamping together those two members. The lower connector 17 comprises a pair of similar hook elements 20 respectively mounted in the two channels and interengageable by relative movement between the two members, along the length thereof. The upper and lower connectors 16 and 17 will now be described in greater detail.

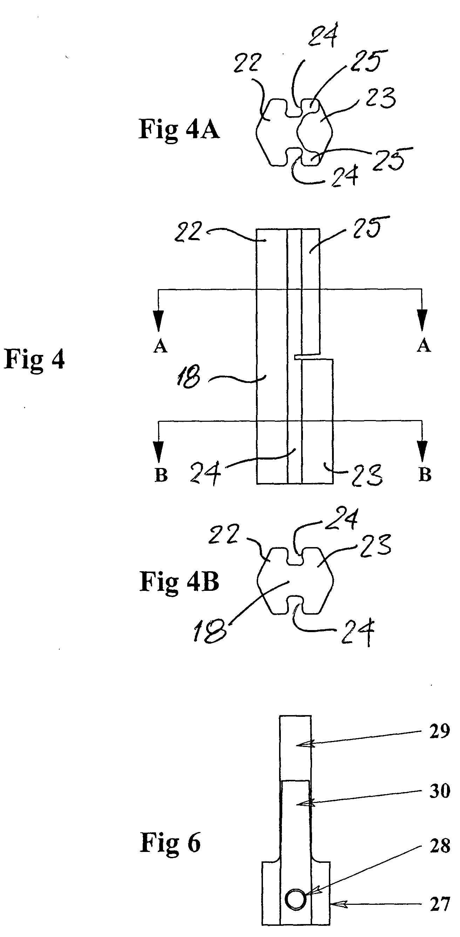

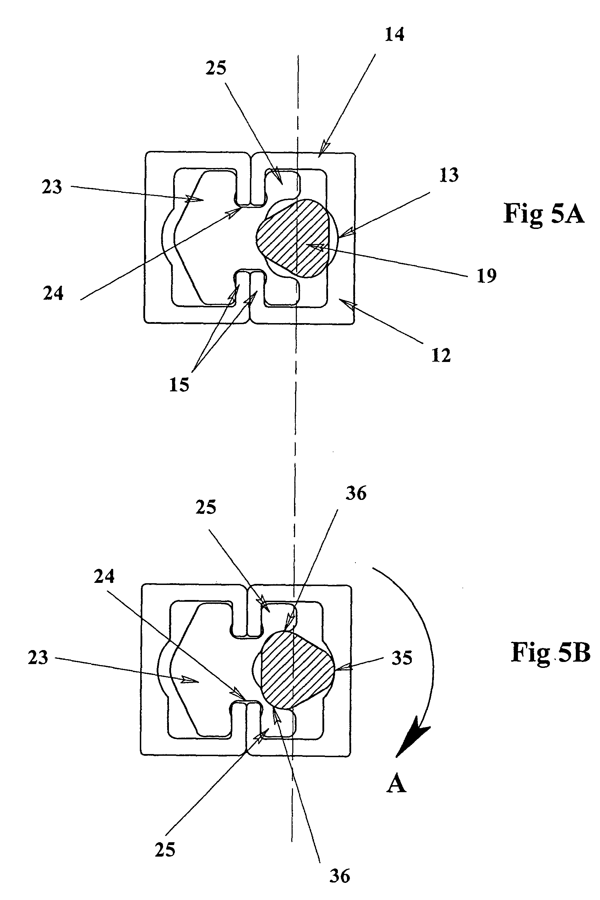

The main body 18 of the first connector 16 comprises a plastics moulding of a relatively hard but deformable material and has the shape best seen in Figures 4 and 5. The main body 18 thereof defines first and second portions 22,23 configured to be a sliding fit within the channels of the two members 10,11, the main body having a pair of opposed grooves 24 in which are received the respective flanges 15 of the channel members. The lower part of the main body 18 is essentially symmetrical, as shown in Figure 4B, but the upper part is cut away as shown in Figure 4A so as to define a pair of arms 25 lying one to each side of the channel member within which the first portion 22 is located. The cam 19 is received in that upper part (see Figures 1 and 2) and is profiled so that when the connector is located in two channel members as shown in Figures 1, 2 and 5, rotation of the cam from its free position ((Figure 5A) to its locked position (Figure 5B) drives one lobe of the cam into the recess 13 in the associated channel and the other lobes of the cam apply pressure to the arms 25 so deflecting those arms towards the second portion 23 of the connector. In turn, this clamps the abutting flanges 15 between the second portion 23 and the respective arms 25.

The two hook elements 20 of the second connector 17 are essentially identical. Each has a base portion 27 profiled to be a close sliding fit in a channel, so that the hook element may be slid along the length of a channel from an open end thereof. The base portion is provided with a threaded hole 28 so that the element may be locked at a required position by means of a grub screw (not shown) received in that hole 28 and tightened down to engage in the recess 13 of the base wall 12. Each channel member also has a leg 29 which extends from the base portion 27 along the length of the channel within which the element is received, and a hook 30 which projects from the base portion out of the mouth of the channel, between the flanges 15.

As best seen in Figure 1, the two hooks 30 are profiled so that when interengaged, the hooks draw together the respective channel members 10,11 so as to hold one closely engaged with the other. In order to reach the fully interengaged position shown in Figure 1, the hooks spring to a small extent over each other to reach a stable position; separation of the hooks thus requires the hooks again to be resiliently deformed to a small extent. This stable position is achieved by providing on each hook a head portion 31 behind which is a recess 32 and, adjacent the base portion 27, a protrusion 33 which engages in the recess 32 of the other hook, when in use therewith.

A connection between two wall panels or dividers each having a channel member 10,11 extending along its vertical edges is made up in the following way. Two hook elements 20 are located one in each channel member 10,11 but directed in opposite senses as shown in Figure 1. The hook members are positioned so that the lower end of the head portion 31 of one hook element is at the same distance from the channel member end as the lower end of the leg 29 of the other hook member. The grub screws located in threaded holes 28 are then tightened down to secure the hook members in position.

The panel carrying channel member 11 is lifted slightly and pushed towards the other channel member 10 so that the hooks 30 are received in the opposed channel and then the lifted panel is lowered to interengage the hooks 30, as shown in Figure 1. This draws the two channels together and provided the hook elements have properly been positioned, the two channel members should extend parallel to one another with their respective flanges 15 touching along their lengths.

Next, the first connector 16, including the cam 19 in its free position, is pressed into the two channels from the upper ends thereof, so that the flanges 15 are received in the respective grooves 24 of the connector main body 18. The connector may be pushed down into the channels no further than is necessary for the main body and cam to be located wholly within the channels, though it may be pressed further downwardly in the event that a capping piece is to be fitted over the upper ends of the channels. Then, the cam 19 is turned in the direction of arrow A from its free position shown in Figure 5A to its locked position as shown in Figure 5B, by means of a tool (not shown) engaged with the cam from the open end of the associated channel.

This rotation of the cam moves a first lobe 35 of the cam into the recess 13 in the base wall of the channel and so pushes the cam towards the second channel member 11. In turn, this causes the two opposed lobes 36 of the cam to engage against the inner faces of the arms 25, so thrusting those arms generally towards the junction between the respective flange 15 and side wall 14 of the first channel member. This locks the main body 18 in position in the first channel member and simultaneously clamps together the abutting pair of flanges 15 on the two channel members 10,11.

To release the connection, the cam is simply turned back to its free position shown in Figure 5A. Then, the panel associated with channel member 11 may be lifted sufficiently to disengage the hook elements 20 and the main body 18 from one of the channels.

## Claims

1. A connector for use with two elongate members (10,11) each having a re-entrant channel extending along the length thereof so that the two members when joined by the connector lie side by side with the channels facing each other, said connector comprising a main body (18) defining first and second portions (22,23) each slideable in a respective channel from an open end thereof and profiled to prevent lateral withdrawal out of the mouth of the channel, and a cam (19) rotatably mounted on said first portion (22) and movable between a free position where the main body (18) may be slid along the length of a channel and a locked position where the cam (19) engages an internal wall (13) of the channel and urges a part of said first portion (22) into engagement with a further internal wall (15) of the channel opposed to said wall engaged by the cam (19) thereby to restrain the main body (18) against sliding movement.

2. A connector as claimed in claim 1, wherein the cam (19) is mounted for rotation about an axis substantially parallel to the length of the channel in which the first portion (22) of the main body (18) is slidably mounted when the connector is in use.

3. A connector as claimed in claim 2, wherein the cam when in its locked position engages a base wall (12) of the channel.

4. A connector as claimed in any of the preceding claims, wherein at least the main body (18) of the connector is resiliently deformable, whereby movement of the cam (19) to its locked position deforms the main body sufficiently to interengage the body with both members (10,11) thereby to resist relative movement therebetween.

5. A connector as claimed in claim 4 and for use with a pair of similar channel members (10,11) each having an in-turned flange (15) extending along each edge at the mouth of the respective channel whereby the flanges (15) of one channel engage those of the other channel when the members are connected together, in which connector the main body (18) is profiled closely to fit around the overlying flanges (15) whereby deformation of the body by turning the cam (19) clamps the overlying flanges together.

6. A connector as claimed in claim 5, wherein the first portion (22) of the main body (18) has a pair of arms (25) arranged to be disposed adjacent the inwardly-directed faces of the two flanges (15) of the channel member in which is located the first portion (22), the arms being deformed towards the other channel member (11) as the cam (19) is turned to its locked position thereby clamping together the flanges of the two members .

7. A connection between two elongate members (10,11) each having a re-entrant channel extending along the length thereof whenever made with a connector as claimed in any of the preceding claims, which connection when completed has the two members (10,11) lying side by side with their respective channels confronting each other.

8. A connection as claimed in claim 7, wherein the two members (10,11) are further held one to another by a second joint spaced along the length of the members from said connector, which connector is similar to or essentially the same as the first mentioned connector.

9. A connection as claimed in claim 7, wherein the two members (10,11) are further held one to another by a second joint spaced along the length of the members from said connector, which second joint is completed using a connector (17) having a pair of hook elements (20) mounted one in each channel respectively and directed in opposite senses whereby the hook elements (20) may be interengaged by relative movement thereof, generally along the length of the channels.

10. A connection as claimed in claim 9, wherein the hook elements (20) are profiled so that on interengaging the elements (20) are resiliently deformed so as to resist subsequent separation.

11. A method of connecting together two elongate members (10,11) each having a re-entrant channel extending along the length thereof using a first connector as claimed in any of claims 1 to 5 and a second connector (17) having a pair of hook elements (20) configured for mounting one in each channel respectively, comprising disposing said hook elements (20) one in each channel at opposed locations but with the hook elements directed in opposite senses along the length of the channels, aligning the members (10,11) so as to be generally parallel, interengaging the hook elements by relatively moving the channels along their lengths so as thereby to interengage the hook elements (20), sliding the first and second portions (22,23) of the first connector along the respective channels from the open ends thereof, and then rotating the cam (19) of the first connector to its locked position so as thereby to restrain the first connector main body (18) against sliding movement and clamp together the two channel members.

12. A method as claimed in claim 11, wherein the cam (19) is rotated by a tool inserted into the open end of the respective channel and engaged with the cam.
